# EUROPÄISCHE PATENTSCHRIFT

(11) **EP 1 704 105 B1**
(45) Veröffentlichungstag und Bekanntmachung des Hinweises auf die Patenterteilung: **30.11.2011**
(21) Anmeldenummer: 04820389.7
(22) Anmeldetag: 28.10.2004
(51) Int. Cl.: B65G 47/91, A24C 5/352

(54) **ANORDNUNG ZUM BEFÜLLEN UND/ODER ENTLEEREN VON MIT ARTIKELN GEFÜLLTEN UND/ODER ZU BEFÜLLENDEN BEHÄLTERN SOWIE HANDHABUNGSVORRICHTUNG ZUM TRANSPORTIEREN DER BEHÄLTER**
ARRANGEMENT FOR THE FILLING AND/OR EMPTYING OF CONTAINERS FILLED AND/OR FOR FILLING WITH ARTICLES AND MANIPULATION DEVICE FOR TRANSPORTING THE CONTAINERS
ENSEMBLE SERVANT A REMPLIR ET/OU A VIDER DES CONTENANTS A REMPLIR ET/OU REMPLIS D'ARTICLES ET DISPOSITIF DE MANIPULATION POUR LE TRANSPORT DESDITS CONTENANTS

(30) Priorität: 25.11.2003 DE 10355876
(43) Veröffentlichungstag der Anmeldung: 27.09.2006
(60) Teilanmeldung: 09075225.4
(73) Patentinhaber: Hauni Maschinenbau AG, 21033 Hamburg (DE)
(72) Erfinder: BUDNY, Piotr, 21035 Hamburg (DE); KÄGELER, Peter, 21502 Geesthacht (DE)
(74) Vertreter: Wenzel & Kalkoff
(86) Internationale Anmeldenummer: PCT/EP2004/012350
(87) Internationale Veröffentlichungsnummer: WO 2005/058077

(56) Entgegenhaltungen:
- EP-A- 1 106 086
- EP-A- 1 308 101
- DE-A1- 1 632 196
- DE-A1- 3 917 097
- US-A1- 2001 046 436
- US-B1- 6 290 448

## Beschreibung

Die Erfindung betrifft eine Anordnung zum Befüllen und/oder Entleeren von mit Artikeln gefüllten und/oder zu befüllenden Behältern, im wesentlichen umfassend mindestens eine Handhabungsvorrichtung zum Transportieren von gefüllten und/oder zu befüllenden Behältern zwischen einem Speicher und einer den Füllstand der Behälter verändernden Vorrichtung, mindestens eine den Füllstand der Behälter verändernde Vorrichtung, sowie mindestens einen Speicher zur Aufnahme gefüllter und/oder zu befüllender Behälter.

Derartige Anordnungen kommen insbesondere in der Tabak verarbeitenden Industrie zum Einsatz. Häufig müssen Artikel aus unterschiedlichen Gründen aus der Verarbeitung ausgeschleust und zu einem späteren Zeitpunkt wieder in die Verarbeitung eingeschleust werden. Es besteht beispielsweise die Notwendigkeit, Filter vor der Verbindung mit einem Tabakstock oder dergleichen auszuhärten. In einem anderen Beispiel muss ein Überangebot an Zigaretten zwischengespeichert werden. Die Filter, Zigaretten oder anderen Artikel werden zu diesem Zweck an einer Befüllungsstation in Behälter, so genannte Schragen, gefüllt und mit der Handhabungsvorrichtung in einen Speicher transportiert. Für den Fall, dass die in den Schragen gepufferten Artikel wieder in die Verarbeitung eingeschleust werden sollen, müssen die Schragen aus den Speichern entnommen und einer Entleerungsstation zugeführt werden.

Bei bekannten Anordnungen sind die Speicher im Bereich der den Füllstand der Behälter verändernden Vorrichtungen angeordnet, wobei die Anordnung derart offen gestaltet ist, dass die Handhabungsvorrichtung auch während des Betriebes zugänglich ist. Auch sind die Speicher und die Vorrichtungen zum Verändern des Füllstandes der Behälter so angeordnet, dass ein komplexer Bewegungsablauf der Handhabungsvorrichtung mit weiten Transportwegen erforderlich ist. Eine solche Anordnung mit den Merkmalen des Oberbegriffes des Anspruches 1 ist aus der DE 39 17 097 A bekannt.

Die bekannten Anordnungen weisen den Nachteil auf, dass zum einen aufgrund der Baugröße erhebliche Verfahrwege für den Transfer der Behälter aus dem Speicher an die den Füllstand der Behälter verändernde Vorrichtung und zurück erforderlich sind, was die Leistung, nämlich insbesondere den Durchsatz der zu transportierenden Artikel, reduziert. Des Weiteren birgt die offene Anordnung ein erhebliches Sicherheitsrisiko für die Bedienperson.

Es ist daher Aufgabe der vorliegenden Erfindung, eine kompakte und universell einsetzbare Anordnung zu schaffen, die leicht handhabbar und sicher ist.

Diese Aufgabe wird durch eine Anordnung der eingangs genannten Art dadurch gelöst, dass die Anordnung als geschlossene Einheit ausgebildet ist, derart, dass die Handhabungsvorrichtung von der mindestens einen den Füllstand der Behälter verändernden Vorrichtung sowie dem mindestens einen Speicher zellenartig umschlossen ist, wobei jeder Speicher einem wahlweise zu öffnenden oder zu schließenden Schleusenelement zugeordnet ist, derart, dass der oder jeder Speicher an der nach innen gerichteten, der Handhabungsvorrichtung zugewandten Seite verschließbar ist. Durch die Bildung einer geschlossenen Zelle ist eine sehr kompakte und gleichzeitig sichere Anordnung geschaffen, die einen Transfer der Behälter mit sehr kurzen Transportwegen gewährleistet. Dadurch werden die Behälter-Wechsel-Zeiten reduziert. Des Weiteren ermöglicht die erfindungsgemäße Ausbildung einen Wechsel der Speicher während des Betriebs der Anordnung. Ein Speicher ist damit von der eigentlichen Zelle abgekoppelt bzw. getrennt, so dass ein unbeabsichtigter Zugriff der Handhabungsvorrichtung ausgeschlossen ist.

Bevorzugt ist die Handhabungsvorrichtung universell derart ausgebildet, dass Behälter an einer glatten Teilfläche auf der aus dem geöffneten Speicher weisende Seite greifbar sind. Dies ermöglicht den flexiblen und im Wesentlichen von der Form und Gestalt der Behälter ungebundenen Einsatz der Anordnung.

Weitere vorteilhafte und bevorzugte Merkmale und Ausführungsformen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine perspektivische Darstellung einer erfindungsgemäßen Anordnung mit vier Speichern,

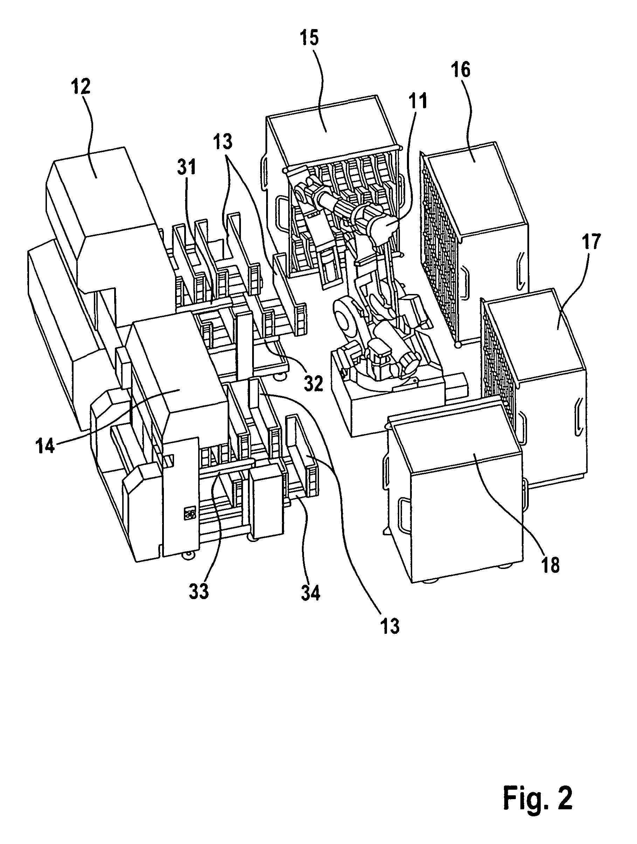

- Fig. 2: eine perspektivische Ansicht von Teilen einer erfindungsgemäßen Anordnung,

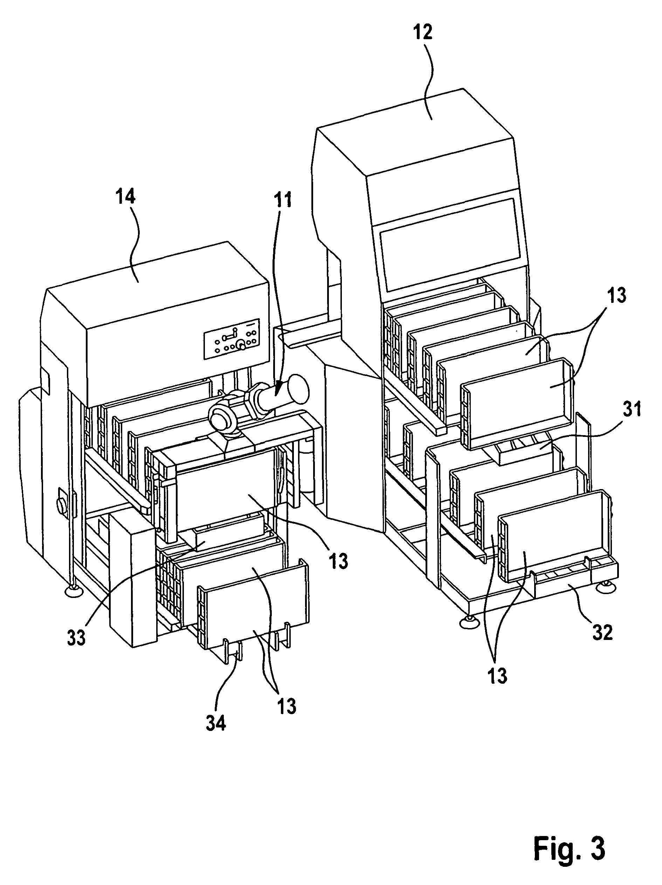

- Fig. 3: eine Einheit aus einer Vorrichtung zum Entleeren von Behältern und einer Vorrichtung zum Befüllen von Behältern,

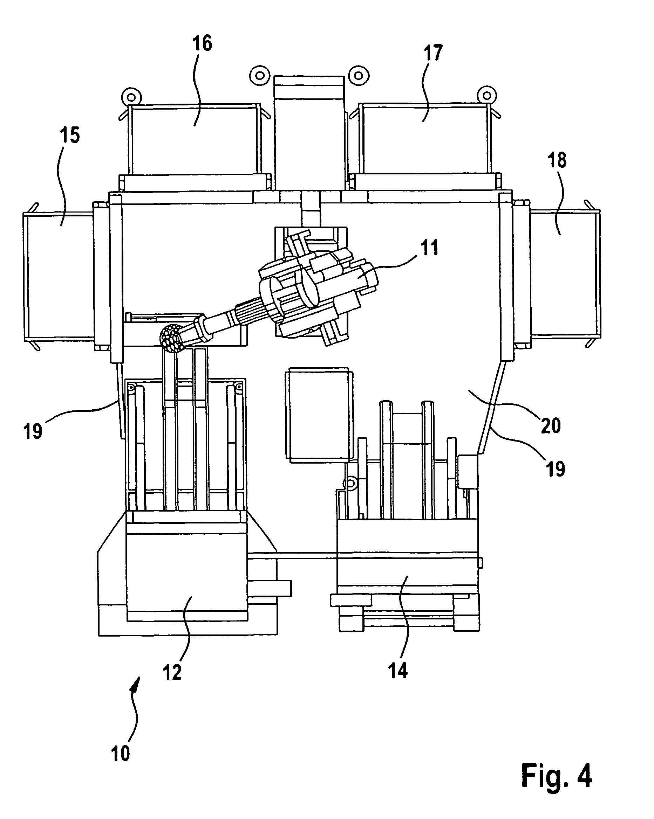

- Fig. 4: eine Draufsicht auf eine Anordnung gemäß Figur 1,
- Fig. 5a + b): perspektivische Ansichten eines an einem Schleusenelement angedockten Rollwagens von schräg hinten und schräg vorne mit geöffnetem Schleusenelement,
- Fig. 6a + b): perspektivische Ansichten eines vom Schleusenelement abgekoppelter Rollwagens von schräg hinten und schräg vorne mit geschlossenem Schleusenelement,
- Fig. 7: eine perspektivische Ansicht eines Rollwagens mit drei Ebenen mit je sieben Behälterfächern,
- Fig. 8: eine perspektivische Ansicht eines Containerwagens mit drei Containern,
- Fig. 9a + b + c: eine Vorderansicht, eine Seitenansicht und eine Draufsicht eines Speichers,
- Fig. 10a + b + c: die Ansichten des Speicherelementes gemäß der Figuren 9a bis c) mit einem führerlosen Transportfahrzeug unterhalb des Speichers,

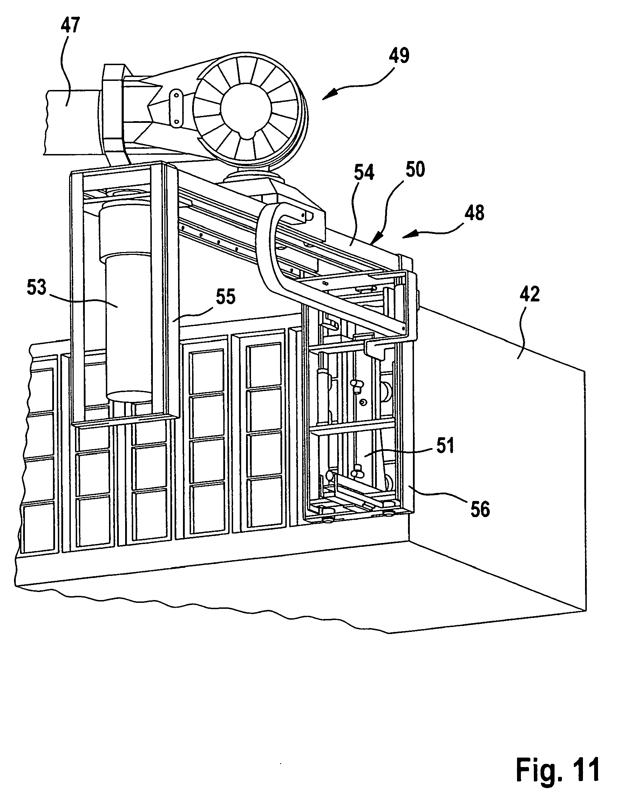

- Fig. 11: eine vergrößerte Darstellung eines Greifelementes,
- Fig. 12a + b): eine Draufsicht bzw. eine Seitenansicht des Greifelementes an einem Behälter in einem Container,
- Fig. 13a + b): eine Draufsicht bzw. eine Seitenansicht des Greifelementes gemäß Figur 10 mit einem aus dem Container entnommenen Behälter,
- Fig. 14: eine perspektivische Darstellung des Greifelementes von schräg vorne,
- Fig. 15: eine Seitenansicht des Greifelementes gemäß Figur 12,
- Fig. 16: Details eines Greifelementes,

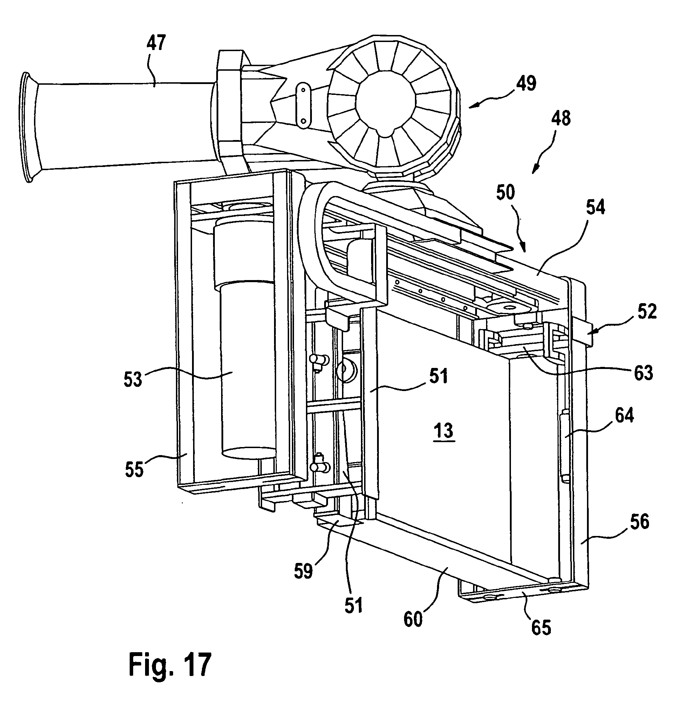

- Fig. 17: eine perspektivische Ansicht des Greifelementes während des Transports eines Behälters,

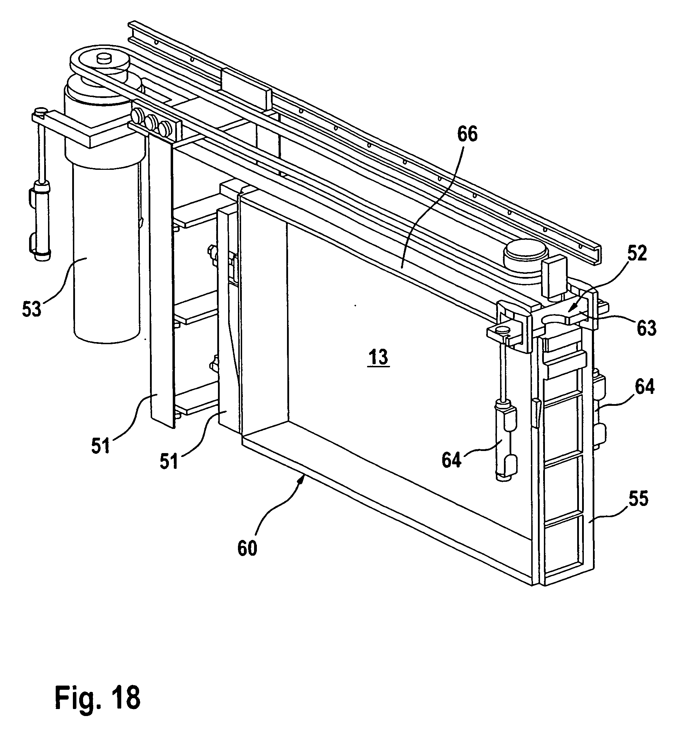

- Fig. 18: eine weitere Ausführungsform eines Greifelementes,
- Fig. 19: eine weitere Ausführungsform eines Greifelementes,
- Fig. 20: eine Draufsicht auf das Greifelement gemäß Figur 15 im Teilschnitt,
- Fig. 21: eine Seitenansicht des Greifelementes gemäß Figur 15,

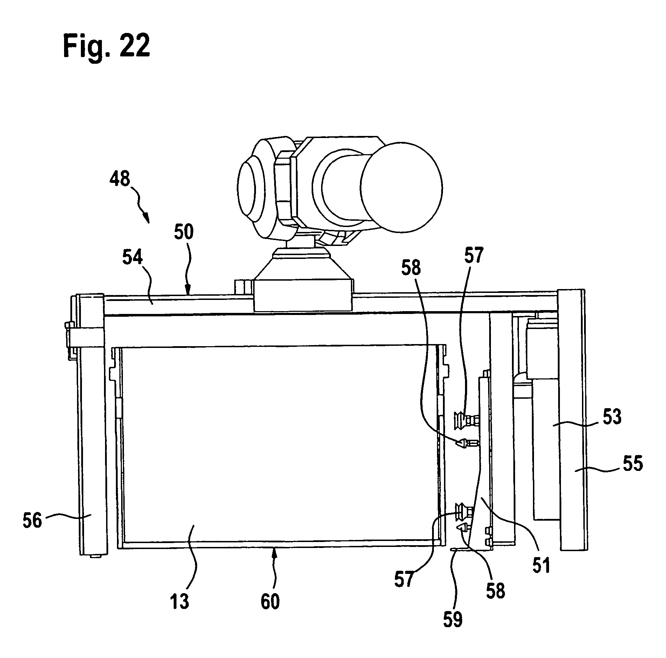

- Fig. 22: eine Seitenansicht des Greifelementes gemäß Figur 19 mit gerade gelöstem Behälter, und
- Fig. 23a + b): eine Draufsicht bzw. Seitenansicht einer weiteren Ausführungsform eines Greifelementes mit beweglichem Stützelement.

Die gezeigten Anordnungen dienen zum Entleeren, Befüllen und Speichern von mit Artikeln gefüllten oder zu befüllenden Behältern. Die Handhabungsvorrichtung als universelles Greif-System ist Bestandteil der Anordnung und dient zum Transfer der Behälter zwischen den einzelnen Komponenten der Anordnung.

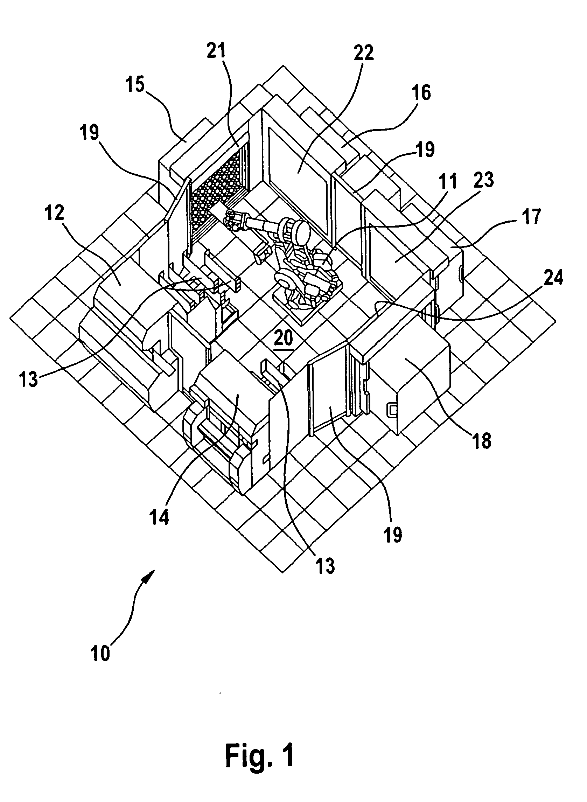

In der Figur 1 ist eine solche Anordnung 10 gezeigt, die im wesentlichen aus einer zentralen Handhabungsvorrichtung 11, einer Vorrichtung 12 zum Entleeren von Behältern 13, einer Vorrichtung 14 zum Befüllen von Behältern 13 sowie vier Speichern 15, 16, 17, 18 gebildet ist, wobei die Vorrichtungen 12 und 13 sowie die Speicher 15 bis 18 durch Zaunelemente 19 zur Bildung eines Arbeitsraumes 20 miteinander verbunden sind. Die Handhabungsvorrichtung 11 ist innerhalb des Arbeitsraumes 20 angeordnet und damit nach außen hin abgeschirmt. Der Arbeitsraum 20 bildet quasi eine in sich geschlossene Zelle, innerhalb der die Handhabungsvorrichtung 11 mit mehreren Freiheitsgraden verfahrbar, verschwenkbar oder in anderer Weise bewegbar ist. Alternativ kann die Anzahl der den Füllstand der Behälter 13 verändernden Vorrichtungen 12 und 14 zum Entleeren bzw. Befüllen der Behälter 13 sowie die Anzahl der Speicher 15 bis 18 variieren.

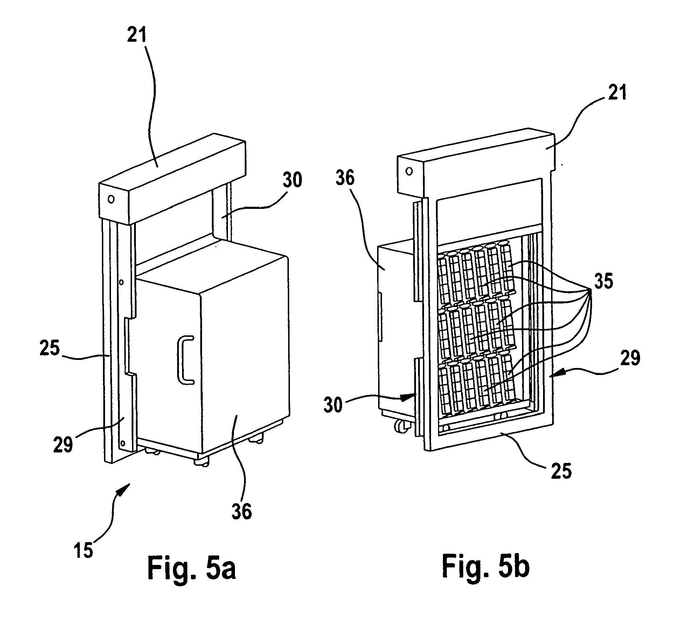

Die Speicher 15 bis 18 sind an ihren nach innen, der Handhabungsvorrichtung 11 bzw. dem Arbeitsraum 17 zugewandten Seite verschließbar ausgebildet. Hierzu ist jedem Speicher 15 bis 18 ein Schleusenelement zugeordnet, das z.B. als Rolltor 21, 22, 23, 24 ausgebildet sein kann. Die Rolltore 21 bis 24 lassen sich öffnen und wieder verschließen, um den Speicher 15 bis 18 jeweils vom Arbeitsraum 17 abzukoppeln. In Figur 1 ist das Rolltor 21 geöffnet, während die Rolltore 22 bis 24 geschlossen sind. Die Speicher 15 bis 18 sind an die Schleusenelemente bzw. die Rolltore 21 bis 24 ankoppelbar und wieder abkoppelbar, um die Speicher 15 bis 18 ggf. austauschen zu können. Die Speicher 15 bis 18 sind an einem Rahmen 25, 26, 27, 28 der Rolltore 21 bis 24 fixierbar, um insbesondere während des Betriebes der Anordnung 10 eine sichere Positionierung gewährleisteten zu können. Die Fixierung wird mittels seitlich am Rahmen 25 bis 28 angeordneter Platten-Elementen 29, 30 (siehe z.B. Figuren 5a und 5b) realisiert. Die Platten-Elemente 29, 30 sind schwenkbar ausgebildet und ermöglichen eine Fixierung sowohl tangential als auch senkrecht zur Öffnung des Rolltores 21 bis 24, wenn die Platten-Elemente 29, 30 nach außen geschwenkt sind.

Die Vorrichtungen 12 und 14 sind nebeneinander angeordnet. Der Vorrichtung 12 zum Entleeren der Behälter 13 ist eine obere Bandstation 31 und eine untere Bandstation 32 vorgeschaltet. Die Bandstation 31 dient zum Ablegen voller Behälter 13 und Zuführen derselben an die Vorrichtung 12. Die Bandstation 32 dient zum Ablegen der in der Vorrichtung 12 entleerten Behälter 13 und Abführen derselben von der Vorrichtung 12. Die Vorrichtung 14 zum Befüllen der Behälter 13 ist analog mit einer oberen Bandstation 33 und einer unteren Bandstation 34 ausgestattet, wobei die Bandstation 33 zum Ablegen leerer Behälter 13 und Zuführen derselben an die Vorrichtung 14 und die Bandstation 34 zum Ablegen der in der Vorrichtung 14 gefüllten Behälter 13 und Abführen derselben von der Vorrichtung 14 dient. Die Bandstationen 31 bis 34 sind alle gleich ausgerichtet und zwar derart, daß die Behälter 13 quer zu ihrer Längserstreckung, also mit einer Breitseite voraus, förderbar sind.

Jeder Vorrichtung 12 und 14 sind in der gezeigten Ausführungsform zwei Speicher 15, 16 und 17, 18 zugeordnet. Die Speicher 15 und 18 sind der Vorrichtung 12 bzw. 14 um 90° versetzt zugeordnet. Das bedeutet, daß die Ausrichtung der Behälter 13 in den Speichern 15 und 18 und auf den Bandstationen 31 bis 34 gleich ist. Die Speicher 16 bzw. 17 sind gegenüber den Speichern 15 und 18 um 90° versetzt angeordnet und stehen auf der den Vorrichtungen 12, 14 gegenüberliegenden Seite der Handhabungsvorrichtung 11. Die Vorrichtungen 12 und 14 können jeweils als sogenannte "Top-Lader" mit einem Zugang für die Behälter 13 von oben oder als "Front-Lader" mit einem Zugang für die Behälter 13 von vorne bzw. von der Seite ausgebildet sein.

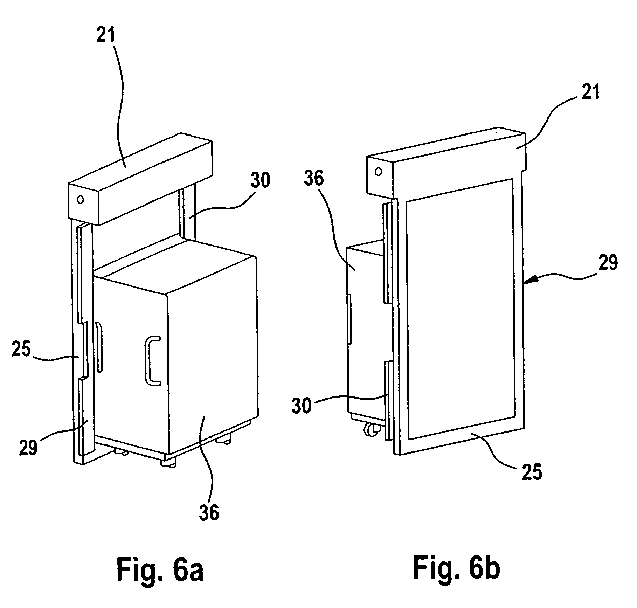

Die Speicher 15 bis 18 sind wahlweise stationär oder mobil ausgebildet. Als stationäre Speicher kommen z.B. feste Gestelle in Betracht, die Fächer 35 zur Aufnahme der Behälter 13 aufweisen. In einer anderen nicht dargestellten Ausführungsform sind ortsfeste Container in einem Regallager angeordnet, die z.B. auch mit einer Bandstation zur Bereitstellung der Behälter in den Greifbereich der Handhabungsvorrichtung 11 versehen sein können. In den Figuren 5 bis 10 sind unterschiedliche mobile Speicher 15 bis 18 gezeigt. Figur 5a zeigt einen Rollwagen 36, der auch Schragenwagen genannt wird. Der Rollwagen 36 ist an ein Rolltor 21 im Bereich des Rahmens 25 angekoppelt und durch die Platten-Elemente 29, 30 fixiert. Das Rolltor 21 ist geöffnet (siehe Figur 5b). Die geschlossene Position des Rolltors 21 ergibt sich aus der Figur 6b. In der Figur 6 ist der Rollwagen 36 vom Rolltor 21 abgekoppelt. Das Rolltor 21 kann sich in unterschiedlichen Zuständen befinden, nämlich zum einen in einer vollständig geschlossenen Position gemäß Figur 6b. In dieser Position kann der Rollwagen 36 abgeführt oder ein neuer Rollwagen 36 angedockt werden. Zum anderen kann das Rolltor 21 mit seiner Unterkante auf dem Rollwagen 36 quasi bündig aufliegen (siehe Figur 5b), so daß der Rollwagen 36 abgearbeitet werden kann. In einer (nicht dargestellten) weiteren Position ist die Unterkante des Rolltores 21 maximal nach oben gefahren. Diese Position ist für die Betriebsunterbrechung der Anordnung 10 vorgesehen, um in die Zelle bzw. den Arbeitsraum 20 eintreten zu können.

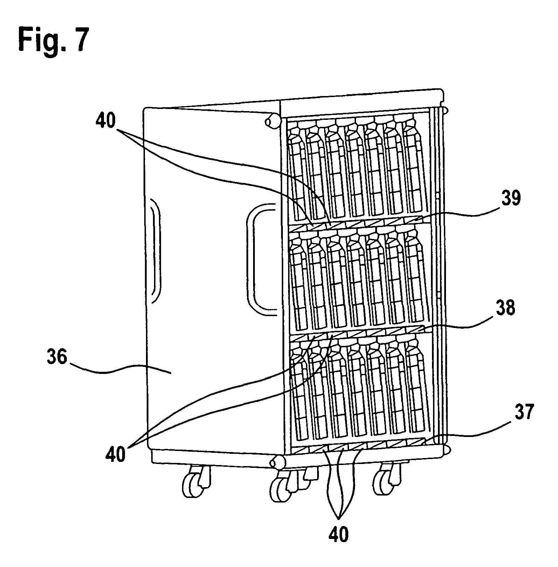

Der Rollwagen 36 (z.B. gemäß Figur 7) weist drei Ebenen 37, 38, 39 auf, auf denen jeweils sieben Fächer 35 angeordnet sind. Die Fächer 35 sind mit einem leicht geneigten Bodenelement 40 versehen, um eine Herausfallen der Artikel aus den teilweise geöffneten Behältern 13 zu verhindern. Des weiteren sind die Fächer 35 derart ausgebildet, daß die in den Fächern 35 angeordneten Behälter 13 bodenseitig, also auf der den Bodenelementen 40 zugewandten Seite, für die Handhabungsvorrichtung 11 zugänglich sind.

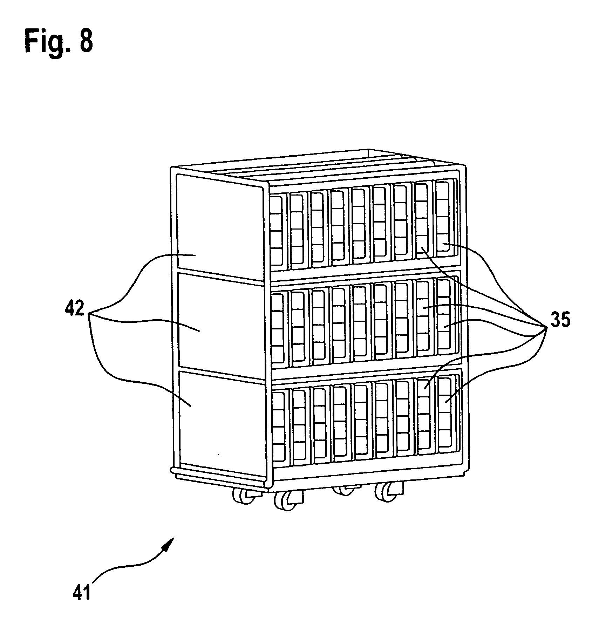

Die Figur 8 zeigt einen Containerwagen 41, der in der gezeigten Ausführungsform drei Container 42 aufweist. Die Container 42 können fest oder lose am Containerwagen 41 angeordnet sein. Die Fächer 35 der Container 42 sind derart ausgebildet, daß die in den Fächern 35 angeordneten Behälter 13 bodenseitig für die Handhabungsvorrichtung 11 nicht zugänglich sind, so daß eine Unterstützung der Behälter 13 erst nach dem teilweisen Herausziehen derselben möglich ist.

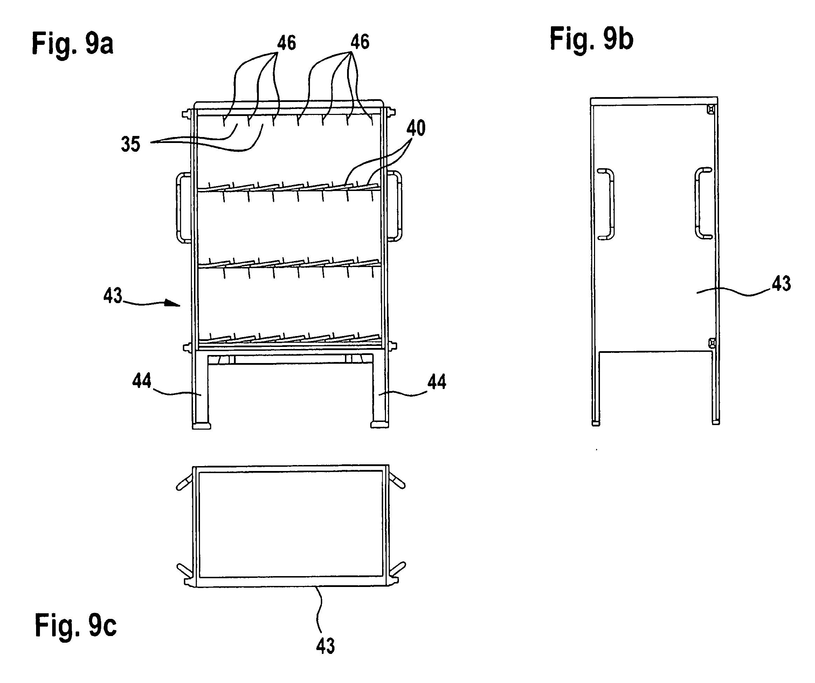

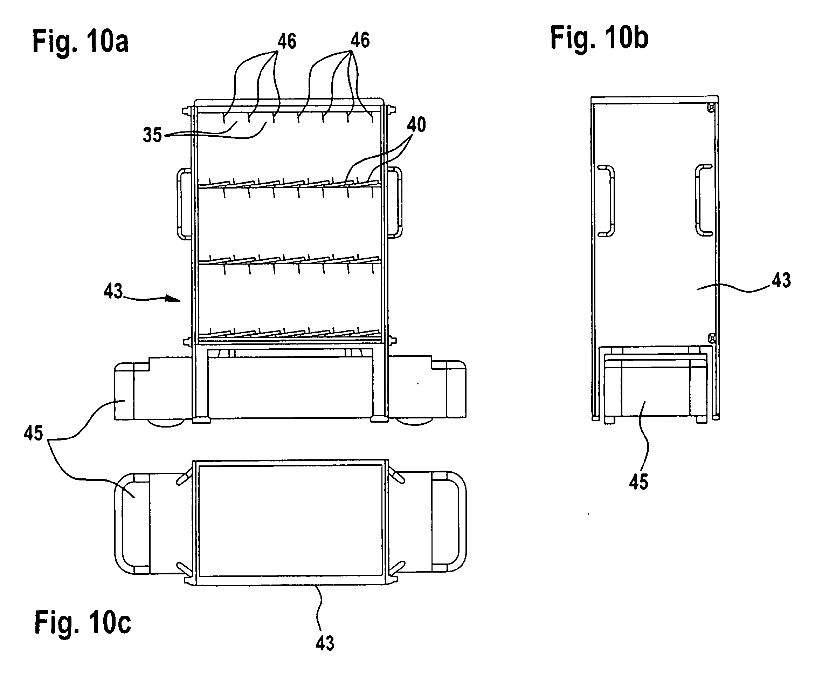

Weitere Ausführungsformen der Speicher 15 bis 18 sind in den Figuren 9 und 10 dargestellt. Die darin gezeigten Speicher sind als Behältergestelle 43 ähnlich wie die Rollwagen 36 aufgebaut, mit dem Unterschied, daß anstelle der Rollen stelzenartige Füße 44 vorgesehen sind. Die Füße 44 sind so hoch ausgebildet, daß z.B. ein fahrerloses bzw. führerloses Transportsystem 45 unter das Behältergestell 43 fahrbar ist, um diesen zu tauschen. Aus den Figuren 9a und 10a läßt sich weiterhin entnehmen, daß jedem der Fächer 35 korrespondierend zu den geneigten Bodenelementen 40 Führungsschienen 46 zugeordnet sind.

Die Handhabungsvorrichtung 11 ist universell derart ausgebildet, daß Behälter 13 an einer glatten Teilfläche auf der aus dem geöffneten Speicher 15 bis 18 weisende Seite greifbar sind. Üblicherweise weist jeder Behälter 13 an einer Stirnseite, die aus dem Speicher 15 bis 18 herausweist, mindestens eine kleine Angriffsfläche auf, an die Greifelemente angreifen können. Im folgenden wird die Handhabungsvorrichtung 11 als Bestandteil der Anordnung 10 näher erläutert.

Die Handhabungsvorrichtung 11 weist im wesentlichen einen Handhabungsarm 47 sowie ein Greifelement 48 auf. Der Handhabungsarm 47 ist in üblicher Weise ausgebildet und in mehrere Freiheitsgraden bewegbar, und zwar sowohl in linearer Richtung als auch schwenkbar. Das Greifelement 48 ist an einem freien Ende 49 des Handhabungsarms 47 bewegbar angeordnet. Das Greifelement 48 selbst besteht im wesentlichen aus einer gestellartigen Linearführung 50, einem bewegbaren Tragelement 51 sowie einem Halteelement 52 für die Behälter 13. Des weiteren weist das Greifelement 48 einen Antrieb 53 für die Linear- und Schwenkbewegung des Greifelementes 48 auf.

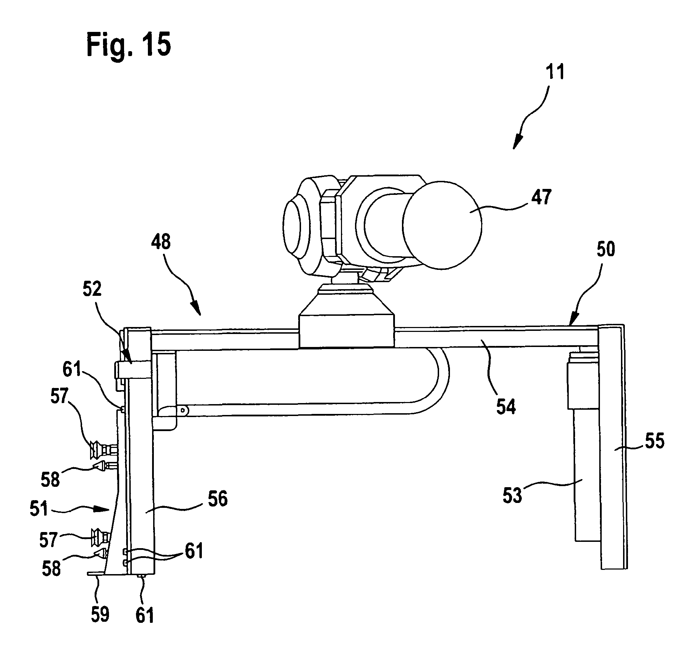

Die Linearführung 50 weist eine etwa U-förmige Gestalt auf. Hierzu weist eine Laufschiene 54 an entgegengesetzten Enden zwei Gestellelemente 55 und 56 auf, die sich ausgehend von der Laufschiene 54 nach unten erstrecken. Das Tragelement 51 ist auf der Laufschiene 54 zum Greifen, Herausziehen und Hineinschieben der Behälter 13 aus einem Speicher 15 bis 18 bzw. in einen Speicher 15 bis 18 verfahrbar. Das Greifelement 48 ist derart ausgebildet, daß Behälter 13 an glatten Teilflächen auf der aus dem Speicher 15 bis 18 weisenden Seite greifbar sind. Hierzu sind an dem Greifelement 48 Elemente zum Drücken und/oder Ziehen der Behälter 13 angeordnet. Die Elemente zum Ziehen der Behälter 13 sind als Saugnäpfe 57 ausgebildet. Vorzugsweise zwei Saugnäpfe 57 sind beabstandet zueinander und übereinander an dem Tragelement 51 angeordnet, und zwar auf der den Behältern 13 zugewandten Seite. Jedem Saugnapf 57 ist ein Pufferelement 58 zum Drücken der Behälter 13 zugeordnet, so daß zwei Pufferelemente 58 beabstandet zueinander und übereinander am Tragelement 51 angeordnet sind (siehe z.B. Figur 15). Die Saugnäpfe 57 sind an nicht dargestellte Saugluftleitungen angeschlossen. Die Pufferelemente 58 sind aus elastischem Material nahezu starr ausgebildet.

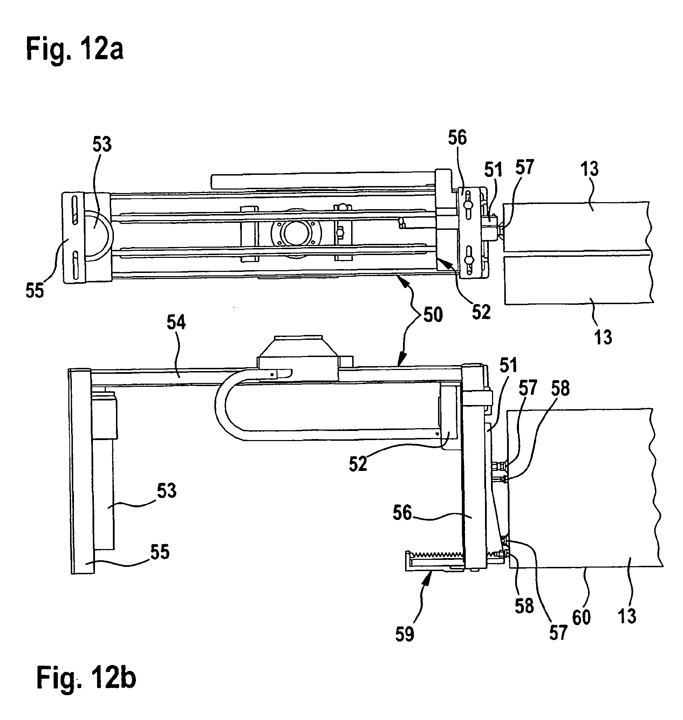

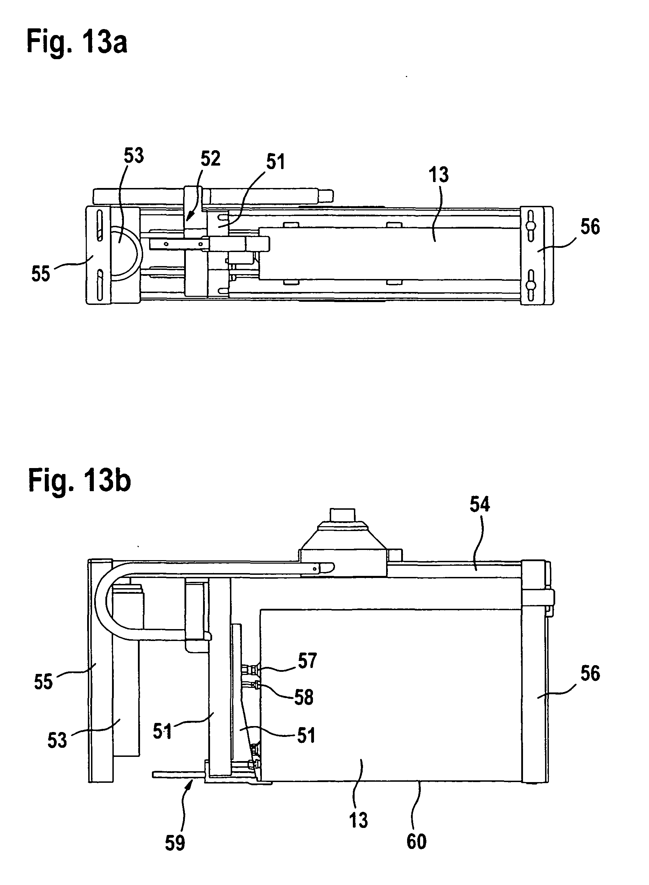

Am Tragelement 51 ist ein den Boden eines Behälter 13 abstützendes Stützelement 59 angeordnet. In der Figur 15 ist das Stützelement 59 z.B. feststehend ausgebildet und ragt vom Tragelement 51 in die gleiche Richtung wie die Saugnäpfe 57 und Pufferelemente 58. Das Stützelement 59 kann aber auch bewegbar bzw. ausweichbar ausgebildet sein (siehe z.B. Figur 12b). Das bewegbare Stützelement 59 ist federbelastet und in einer Ausweichposition gegen die Federkraft hinter die Saugnäpfe 57 und Pufferelemente 58 zurückgezogen (Figur 12b). In einer Stützposition (siehe z.B. Figur13b) ist das Stützelement 59 unterhalb des Bodens 60 des Behälters 13 positioniert.

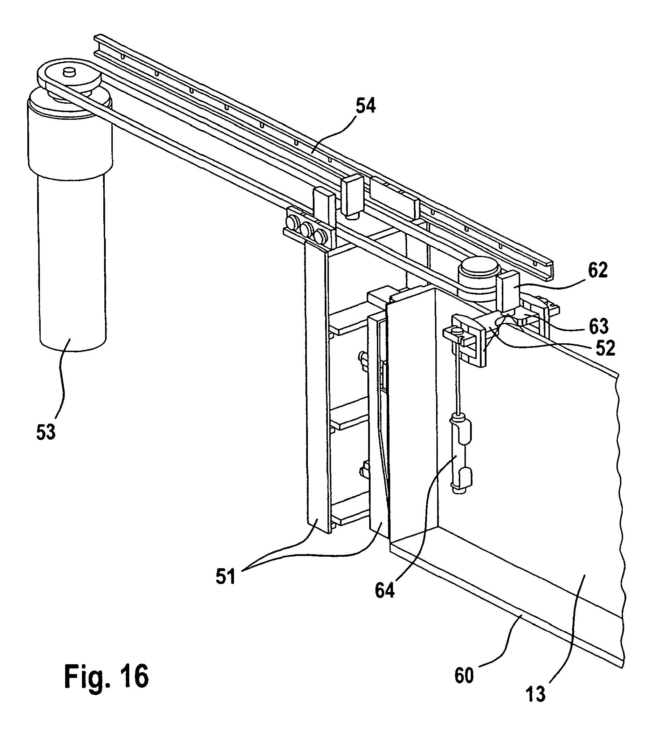

Am Greifelement 48, vorzugsweise im Bereich des Tragelementes 51 auf der den Behältern 13 zugewandten Seite ist mindestens ein Sensorelement 61 angeordnet. Vorzugsweise sind mehrere, insbesondere drei Sensorelemente 61 vorgesehen. Die Sensorelemente 61 dienen insbesondere der Positionserkennung der Behälter-Boden-Ebene sowie der Behälter-Rückwand-Ebene. Des weiteren ist an Greifelement 48 mindestens ein Überwachungsmittel, vorzugsweise eine Kamera 62 angeordnet. Die Kamera 62 ist am Halteelement 52 angeordnet, und zwar derart, daß eine Inspektion in den Behälter 13 hinein zu Zwecken der Überwachung des Inhaltes sowie des Zustandes des Inhaltes sichergestellt ist (siehe z.B. Figur 16).

Der Figur 16 ist weiterhin zu entnehmen, daß das Halteelement 52 eine Andrückplatte 63 umfaßt, die mittels Druckzylindern 64 bewegbar ist. Die Andrückplatte 63 dient zur Fixierung der Behälter 13 beim Transport derselben. Der Behälter 13 wird beim Transport zwischen der Andrückplatte 63 und einem Steg 65 eingeklemmt, wobei sich der Behälter 13 zusätzlich auf der dem Steg65 gegenüberliegenden Seite auf dem Stützelement 59 abstützt. Die Andrückplatte 63 steht in Wirkverbindung mit einer weiteren Platte 66, die ebenfalls durch die Druckzylinder 64 betätigbar ist. Die Platte 66 dient zur Fixierung der Artikel innerhalb der Behälter 13.

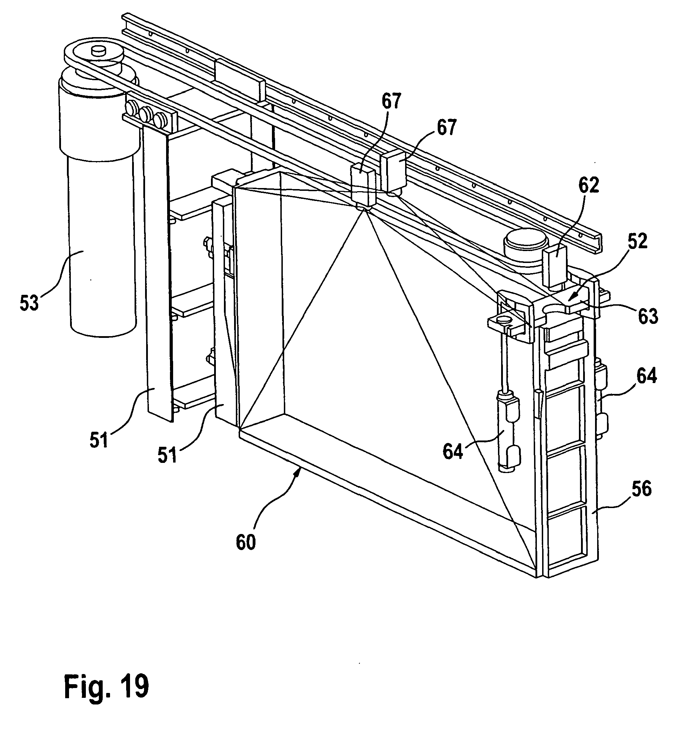

In einer weiteren Ausführungsform gemäß Figur 19 sind mehrer Kameras 67 angeordnet, die zur Erfassung unerwünschter Bewegungen der Artikel innerhalb der Behälter 13 sowie der optischen Qualitätskontrolle dienen. Hierzu sind die Kameras 67 oberhalb der zu transportierenden Behälter 13 angeordnet, so daß eine Inspektion von oben erfolgen kann.

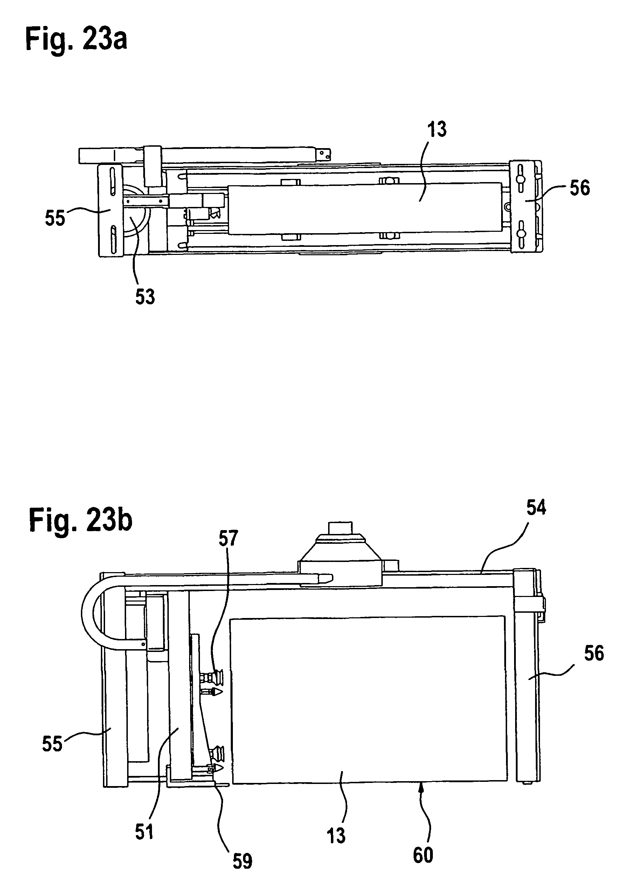

Wesentliche Verfahrensprinzipien, insbesondere die Vorgänge zum Entnehmen von Behältern 13 aus den Speichern 15 bis 18 werden im folgenden beschrieben:
Beim Einsatz eines Containerwagens 41 als Speicher 15 bis 18 wird das Greifelement 48 zum Entnehmen eines z.B. vollen Behälters 13 aus einem Fach 35 des Containers 42 vor dem Fach 35 positioniert. Die Saugnäpfe 57 tauchen in das Fach 35 ein. Das Stützelement 59 ist dabei gegen die Federkraft zurückgedrückt, so daß sie im Zustand des Eintauchens nicht als Stützelement 59 sondern als Anschlag wirkt. Das Greifelement 48 kann also ohne Kollision mit den Bodenelementen 40 des Faches 35 in das Fach 35 eintauchen (siehe z.B. Figur12b). Sobald der Behälter 13 mindestens teilweise aus dem Fach 35 gezogen ist, wird das Stützelement 59 durch die Federkraft in die Stellung unterhalb des Bodens 60 des Behälters 13 gebracht. (siehe z.B. Figur 13b). Der vollständig aus dem Fach 35 entnommene Behälter 13 wird dann durch den Handhabungsarm 47 z.B. in den Bereich der Vorrichtung 12 zum Entleeren des Behälters 13 bewegt. Sobald sich der noch im Greifelement 48 befindliche Behälter 13 oberhalb der Bandstation 31 befindet, öffnet sich das Greifelement 48, indem die Fixierung des Behälters 13 sowie die Unterstützung u.a. durch das Stützelement 59 gelöst werden. Die Figur 23 zeigt das Greifelement 48 in offenem Zustand direkt nach der Übergabe an die Bandstation 31 bzw. kurz vor der Aufnahme eines z.B. entleerten Behälters 13 von der unteren Bandstation 32. Das Schließen des Greifelementes 48 erfolgt in umgekehrter Reihenfolge wie das Öffnen.

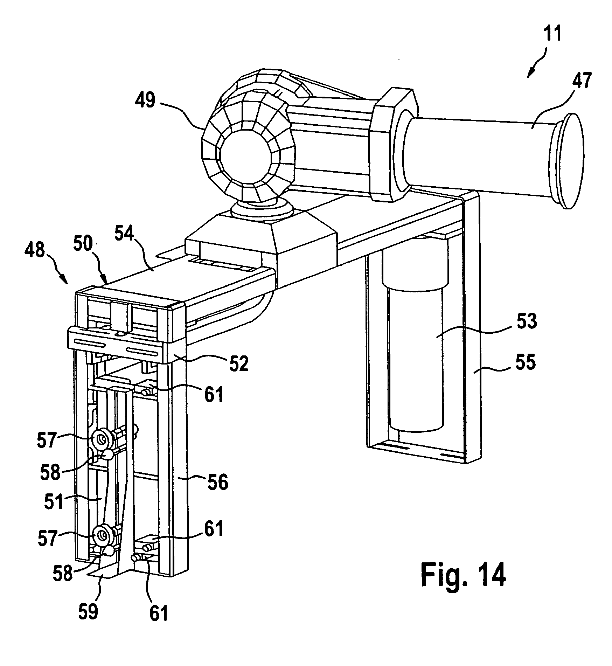

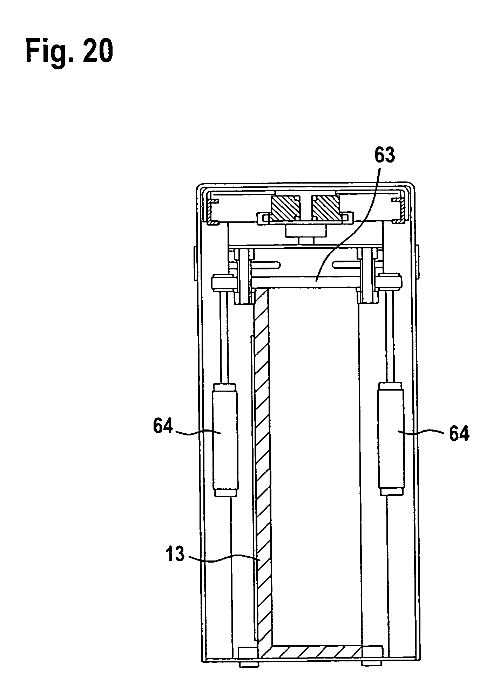

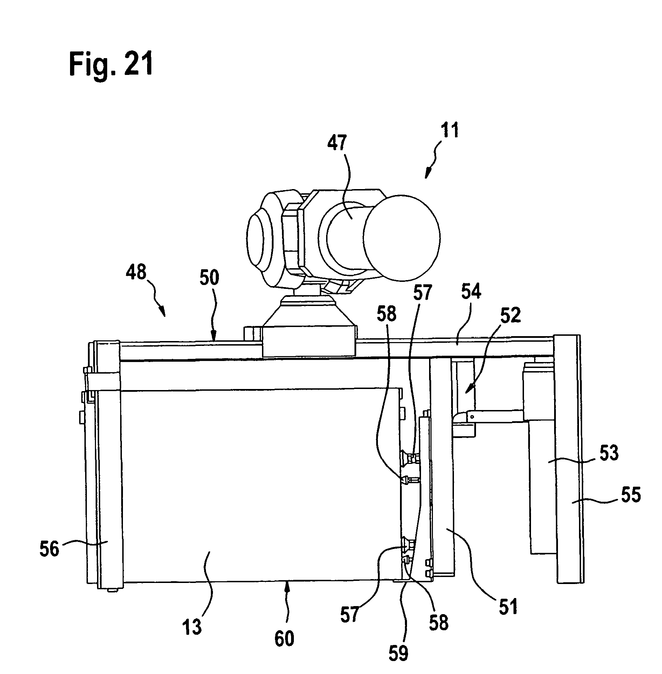

Das Entnehmen eines Behälters 13 z.B. aus einem Rollwagen 36 mit einem Greifelement 48 mit festem, unbeweglichen Stützelement 59 läuft wie folgt ab: Figur 14 zeigt die Suchfahrt des Greifelementes 48 vor einem Fach 35 mit einem Behälter 13. Mittels der Sensorelemente 61 werden die Positionen der Behälter-Boden-Ebene sowie der Behälter-Rückwand-Ebene bestimmt (siehe auch Figur 15). Sobald das Greifelement 48 vor einem Fach 35 korrekt positioniert ist, fährt das Greifelement 48 soweit in Richtung des Behälters 13 vor, daß das Stützelement 59 in das Fach 35 hinein unter den Boden 60 des Behälters 13 greift, so daß der Behälter 13 auf dem Stützelement 59 aufliegt. Durch Zurückziehen des Greifelementes 48 wird der Behälter 13 aus dem Fach gezogen. In Figur 16 ist der Behälter 13 bereits teilweise aus dem Fach 35 gezogen und liegt nur noch mit dem distalen Ende auf dem Bodenelement 40 des Faches 35 auf. Beim Herausziehen des Behälters 13 wird dieser auf dem Steg 65 abgestützt und durch das Gestellelement 56 geführt (In Figur 16 ist das Gestellelement 56 der Übersichtlichkeit halber weggelassen). Dabei wird zeitgleich durch die Kamera 62 die Lage der Artikel im Behälter 13 bzw. die vollständige Entleerung des Behälters 13 überprüft. Der Behälter 13 wird während des Transports durch seinen eigenen Boden 60 positioniert. Die hintere Seitenwand wird von einer Platte zwischen seitlichen Führungen angedrückt. (siehe auch den Querschnitt gemäß Figur 20). Die vordere Seitenwand wird durch die Saugnäpfe 57 gehalten und durch das feste Stützelement 59 von unten unterstützt. Die Figur 21 zeigt das Greifelement 48 mit dem festen Stützelement 59 im Transportzustand. Sobald das Greifelement 48 seine Position zur Abgabe des Behälters 13 über der Bandstation 31 erreicht hat, wird der Behälter 13 abgesetzt und das Greifelement 48 geöffnet. Hiezu wird die Andrückplatte 63 gelöst und leicht angehoben. Der Behälter 13 steht auf der Bandstation 31. Das Tragelement 51 bewegt sich von der Behälterseitenwand weg und die Handhabungsvorrichtung 11 leitet die entgegengesetzte Bewegung ein, allerdings in einem geringeren Maße als das Tragelement 51, so daß das Greifelement 48 geöffnet ist. Nunmehr kann die Handhabungsvorrichtung 11 verschwenken und einen anderen Behälter 13 in umgekehrter Funktionsfolge aufnehmen.

## Patentansprüche

1. Anordnung zum Befüllen und/oder Entleeren von mit Artikeln gefüllten und/oder zu befüllenden Behältern (13), im wesentlichen umfassend mindestens eine Handhabungsvorrichtung (11) zum Transportieren von gefüllten und/oder zu befüllenden Behältern (13) zwischen einem Speicher (15, 16, 17, 18) und einer den Füllstand der Behälter (13) verändernden Vorrichtung (12, 14), mindestens eine den Füllstand der Behälter (13) verändernde Vorrichtung (12, 14), sowie mindestens einen Speicher (15 bis 18) zur Aufnahme gefüllter und/oder zu befüllender Behälter (13), **dadurch gekennzeichnet, dass** die Anordnung (10) als geschlossene Einheit ausgebildet ist, derart, dass die Handhabungsvorrichtung (11) von der mindestens einen den Füllstand der Behälter verändernden Vorrichtung (12, 14) sowie dem mindestens einen Speicher (15 bis 18) zellenartig umschlossen ist, wobei jeder Speicher (15 bis 18) einem wahlweise zu öffnenden oder zu schließenden Schleusenelement zugeordnet ist, derart, dass der oder jeder Speicher (15 bis 18) an der nach innen gerichteten, der Handhabungsvorrichtung (11) zugewandten Seite verschließbar ist.

2. Anordnung nach Anspruch 1, **dadurch gekennzeichnet, dass** die Anordnung (10) neben vier Speichern (15 bis 18) eine Vorrichtung (12) zum Entleeren von Behältern (13) und eine Vorrichtung (14) zum Befüllen von Behältern (13) aufweist, die durch Zaunelemente (19) zu einer ringförmigen, einen Arbeitsraum (20) bildenden Zelle verbunden sind, wobei die Handhabungsvorrichtung (11) im Arbeitsraum (20) angeordnet ist.

3. Anordnung nach Anspruch 1, **dadurch gekennzeichnet, dass** die Speicher (15 bis 18) an das Schleusenelement ankoppelbar und abkoppelbar sind.

4. Anordnung nach einem der Ansprüche 1 bis 3, **dadurch gekennzeichnet, dass** die Schleusenelemente als Rolltore (21, 22, 23, 24) ausgebildet sind.

5. Anordnung nach Anspruch 4, **dadurch gekennzeichnet, dass** die Speicher (15 bis 18) an Rahmen (25, 26, 27, 28) der Rolltore (21 bis 24) fixierbar sind.

6. Anordnung nach einem der Ansprüche 1 bis 5, **dadurch gekennzeichnet, dass** die Speicher (15 bis 18) stationär oder mobil ausgebildet sind.

7. Anordnung nach einem der Ansprüche 1 bis 6, **dadurch gekennzeichnet, dass** die Speicher (15 bis 18) mindestens ein Fach (35), vorzugsweise mehrere Fächer (35) zur Aufnahme der Behälter (13) aufweisen.

8. Anordnung nach einem der Ansprüche 1 bis 7, **dadurch gekennzeichnet, dass** die Speicher (15 bis 18) als Rollwagen (36) ausgebildet sind.

9. Anordnung nach einem der Ansprüche 1 bis 8, **dadurch gekennzeichnet, dass** die Speicher (15 bis 18) als Containerwagen (41) ausgebildet sind.

10. Anordnung nach Anspruch 8 oder 9, **dadurch gekennzeichnet, dass** die Rollwagen (36) bzw. Containerwagen (41) im Bereich der Rolltore (21 bis 24) mittels schwenkbar am Rahmen (25 bis 28) angeordneter Platten-Elemente (29, 30) fixierbar sind.

11. Anordnung nach einem der Ansprüche 1 bis 10, **dadurch gekennzeichnet, dass** die Handhabungsvorrichtung (11) universell derart ausgebildet ist, dass Behälter (13) an einer glatten Teilfläche auf der aus dem geöffneten Speicher (15 bis 18) weisenden Seite greifbar sind.

## Claims

1. Arrangement for filling and/or emptying receptacles (13) filled and/or to be filled with articles, essentially including at least one handling device (11) for transporting receptacles (13) that have been and/or are to be filled between a reservoir (15, 16, 17, 18) and a device (12, 14) which alters the level of the receptacles (13), at least one device (12, 14) which alters the level of the receptacles (13), and at least one reservoir (15 to 18) for holding receptacles (13) that have been and/or are to be filled, **characterised in that** the arrangement (10) is designed as a closed unit, such that the handling device (11) is surrounded in cell fashion by the at least one device (12, 14) altering the level of the receptacles and by the at least one reservoir (15 to 18), wherein each reservoir (15 to 18) is associated with a tray bay element which can optionally be opened or closed, in such a way that the or each reservoirs (15 to 18) are closable on the inwardly directed side facing towards the handling device (11).

2. Arrangement according to claim 1, **characterised in that** the arrangement (10) in addition to four reservoirs (15 to 18) has a device (12) for emptying receptacles (13) and a device (14) for filling receptacles (13), which are connected by fence elements (19) into an annular cell forming a work chamber (20), the handling device (11) being arranged in the work chamber (20).

3. Arrangement according to claim 1, **characterised in that** the reservoirs (15 to 18) can be coupled to and uncoupled from the tray bay element.

4. Arrangement according to any one of claims 1 to 3, **characterised in that** the tray bay elements are constructed as roll-up gates (21, 22, 23, 24).

5. Arrangement according to claim 4, **characterised in that** the reservoirs (15 to 18) can be fixed to frames (25, 26, 27, 28) of the roll-up gates (21 to 24).

6. Arrangement according to any one of claims 1 to 5, **characterised in that** the reservoirs (15 to 18) are stationary or mobile.

7. Arrangement according to any one of claims 1 to 6, **characterised in that** the reservoirs (15 to 18) have at least one compartment (35), preferably several compartments (35), for receiving the receptacles (13).

8. Arrangement according to any one of claims 1 to 7, **characterised in that** the reservoirs (15 to 18) are constructed as trolleys (36).

9. Arrangement according to any one of claims 1 to 8, **characterised in that** the reservoirs (15 to 18) are constructed as container trolleys (41).

10. Arrangement according to claim 8 or 9, **characterised in that** the trolleys (36) or container trolleys (41) can be fixed in the region of the roll-up gates (21 to 24) by means of plate elements (29, 30) arranged pivotably on the frame (25 to 28).

11. Arrangement according to any one of claims 1 to 10, **characterised in that** the handling device (11) is designed universally in such a way that receptacles (13) can be gripped at a smooth partial surface on the side facing out of the open reservoir (15 to 18).

## Revendications

1. Ensemble servant à remplir et/ou à vider des contenants (13) remplis d'articles et/ou à remplir, comprenant sensiblement au moins un dispositif de manutention (11) pour transporter des contenants (13) remplis et/ou à remplir entre un réservoir (15, 16, 17, 18) et un dispositif (12, 14) faisant varier le niveau de remplissage des contenants (13), au moins un dispositif (12, 14) faisant varier le niveau de remplissage des contenants (13), ainsi qu'au moins un réservoir (15 à 18) destiné à recevoir des contenants (13) remplis et/ou à remplir, **caractérisé en ce que** l'ensemble (10) est réalisé en tant qu'ensemble fermé, de façon telle que le dispositif de manutention (11) est entouré à la manière d'une cellule par ledit au moins un dispositif (12, 14) faisant varier le niveau de remplissage des contenants ainsi que par ledit au moins un réservoir (15 à 18), chaque réservoir (15 à 18) étant associé à un élément de sas à ouvrir ou à fermer sélectivement, de façon telle que le ou chaque réservoir (15 à 18) peut être fermé sur le côté orienté vers l'intérieur et tourné vers le dispositif de manutention (11).

2. Ensemble selon la revendication 1, **caractérisé en ce que** l'ensemble (10) présente, outre quatre réservoirs (15 à 18), un dispositif (12) pour vider des contenants (13) et un dispositif (14) pour remplir des contenants (13), lesquels sont reliés par des éléments de clôture (19) pour constituer une cellule formant un espace de travail (20) circulaire, le dispositif de manutention (11) étant disposé dans l'espace de travail (20).

3. Ensemble selon la revendication 1, **caractérisé en ce que** les réservoirs (15 à 18) peuvent être accouplés à et désaccouplés de l'élément de sas.

4. Ensemble selon l'une des revendications 1 à 3, **caractérisé en ce que** les éléments de sas sont conçus sous forme de portes roulantes (21, 22,23,24).

5. Ensemble selon la revendication 4, **caractérisé en ce que** les réservoirs (15 à 18) peuvent être fixés sur des bâtis (25, 26, 27, 28) des portes roulantes (21 à 24).

6. Ensemble selon l'une des revendications 1 à 5, **caractérisé en ce que** les réservoirs (15 à 18) sont conçus de manière fixe ou mobile.

7. Ensemble selon l'une des revendications 1 à 6, **caractérisé en ce que** les réservoirs (15 à 18) présentent au moins un compartiment (35), de préférence plusieurs compartiments (35) pour recevoir les contenants (13).

8. Ensemble selon l'une des revendications 1 à 7, **caractérisé en ce que** les réservoirs (15 à 18) sont conçus sous forme de chariots roulants (36).

9. Ensemble selon l'une des revendications 1 à 8, **caractérisé en ce que** les réservoirs (15 à 18) sont conçus sous forme de chariots porte-conteneurs (41).

10. Ensemble selon la revendication 8 ou 9, **caractérisé en ce que** les chariots roulants (36) ou chariots porte-conteneurs (41) peuvent être fixés dans la région des portes roulantes (21 à 24) au moyen d'éléments en forme de plaques (29, 30) disposés à pivotement sur le bâti (25 à 28).

11. Ensemble selon l'une des revendications 1 à 10, **caractérisé en ce que** le dispositif de manutention (11) est de type universel, conçu de façon que des contenants (13) puissent être saisis au niveau d'une surface partielle lisse sur le côté orienté vers l'extérieur du réservoir (15 à 18) ouvert.
